# EUROPÄISCHE PATENTANMELDUNG

(11) **EP 3 617 248 A1**
(43) Veröffentlichungstag der Anmeldung: **04.03.2020**
(21) Anmeldenummer: 18191602.4
(22) Anmeldetag: 30.08.2018
(51) Int. Cl.: C08G 64/34, C08G 64/40, C08G 64/20, C08G 65/26

(54) **VERFAHREN ZUR ABTRENNUNG VON GASFÖRMIGEN BESTANDTEILEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der Erfindung ist ein Verfahren zur Abtrennung von in flüssigen Reaktionsgemischen gelösten gasförmigen Bestandteilen bei der Copolymerisation von Alkylenoxid und Kohlendioxid, dadurch gekennzeichnet, dass
(η) das flüssige Reaktionsgemisch vor der Entspannung einem Druck von 5,0 bis 100,0 bar (absolut) aufweist, wobei die nachfolgenden Verfahrensstufen in der angegebenen Reihenfolge ausgeführt werden:
(i) Entspannung des Reaktionsgemisches um mindestens 50 % des anliegenden Drucks,
(ii) anschließende Tropfenabscheidung mit erster Schaumzerstörung und
(iii) anschließende Blasenabscheidung mit zweiter Schaumzerstörung, wodurch die flüssige Phase geklärt wird,
wobei die Verfahrensstufen (i) bis (iii) ein- oder mehrfach durchlaufen werden, bis das resultierende Reaktionsgemisch einen Druck von 0,01 bis < 5,00 bar (absolut) aufweist,
sowie ein Verfahren zur Herstellung von Polyethercarbonatpolyolen enthaltend die Verfahrensstufen (i) - (iii).

## Beschreibung

Die vorliegende Erfindung betrifft ein Verfahren zur Abtrennung von in flüssigen Reaktionsgemischen gelösten gasförmigen Bestandteilen bei der Copolymerisation von Alkylenoxid und Kohlendioxid.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie CO₂ zu einem Polymer darstellt. Als weiteres Produkt, eigentlich Nebenprodukt, entsteht das in Schema (I) gezeigte cyclische Carbonat (beispielsweise für R = CH₃ Propylencarbonat).

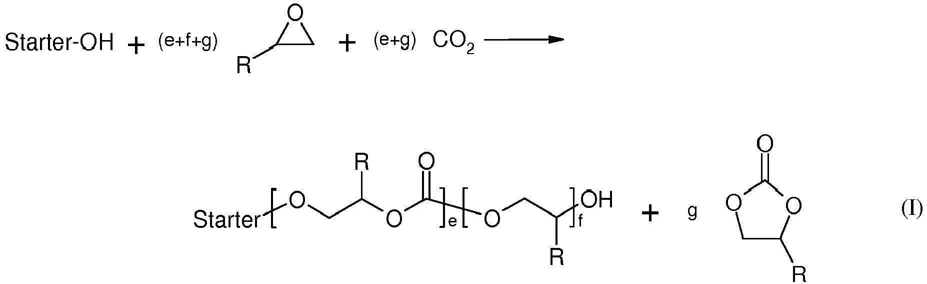

Das Verfahren zur Herstellung von Polyethercarbonatpolyolen erfolgt in der Regel bei einem stöchiometrischen Überschuss an CO₂ und einem dadurch aufgebauten Reaktionsdruck. Daraus ergibt sich die technische Notwendigkeit, dieses überschüssige CO₂ (ggf. zusammen mit noch unreagiertem Alkylenoxid) nach dem Ende der Reaktion abzutrennen.

US 4,500,704 offenbart ein Verfahren zur Herstellung von linearen Copolymeren/Polycarbonaten aus Kohlendioxid und Alkylenoxid unter Verwendung eines Doppelmetallcyanidkomplex-Katalysators auf Zink-Eisen-Basis, wobei der Abbau des bevorzugt durch die CO₂-Dosierung herbeigeführten Reaktionsdrucks von 100 - 1500 psi (entspricht 6,9 - 103,4 bar) batchweise durch eine langsame Entspannung im Reaktionsgefäß vorgenommen wird.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator (wie Zinksulfat) bei Drücken von 2 - 40 bar. Beispiele 1 - 7 offenbaren hierbei eine Abkühlung des Reaktorinhalts und nachfolgende Entnahme, wobei auf eine Trennung des Kohlendioxids ohne "frothing problems" zu achten ist. Alternativ wird das Strippen im Reaktor zur gleichzeitigen Entfernung von unreagierten Epoxiden offenbart.

WO-A 2008/024363 offenbart ein Verfahren zur Herstellung von nicht streng alternierenden Copolymeren (Molmasse 500 - 500,000 g/mol) auf Basis von Propylenoxid und CO₂ in Gegenwart eines Doppelmetallcyanidkomplexes, welcher Anteile von Tetracyanometallat enthält, bei Drücken bis zu 1500 psig (entspricht 103,4 bar) und Temperaturen von 10°C - 150°C. Hier wird der Reaktionsdruck absatzweise durch Kühlung des Reaktors und Entspannung vor Entnahme des Reaktionsprodukts abgebaut.

WO-A 2008/092767 offenbart u.a. eine kontinuierliche Verfahrensführung bei der Herstellung von Polycarbonatpolyolen unter Einsatz von DMC-Katalysatoren bei Drücken bis 30 bar im Temperaturbereich von 60 - 150°C, wobei die Entfernung des CO₂ sowie von Resten an Alkylenoxid durch Anlegen von Vakuum gefolgt von einer weiteren Aufarbeitung zur Entfernung von flüchtigen Nebenkomponenten und ggf. des Katalysators erfolgt. Die Beispiele führen aus, dass der Reaktorinhalt entspannt und nachfolgend unter Vakuum weitere flüchtige Bestandteile aus dem Produkt gestrippt werden.

Aus dem Stand der Technik (DE10147711, US 6762278, DE10147712, WO-A 2006103213, WO-A 2006103214) ist ein Verfahren unter Verwendung von Doppelmetallcyanid-Katalysatoren zur Herstellung von Polyolen aus Oxiranverbindungen und beispielsweise CO₂ bei Drücken von bis zu 20 bar bekannt, wobei der Reaktionsdruck absatzweise durch Kühlung des Reaktors und Entspannung vor Entnahme des Reaktionsprodukts abgebaut und ggf. ein Lösungsmittel zur Aufnahme des hergestellten Polymers eingesetzt wird.

Die genannten einstufigen, absatzweisen Verfahren mit Entspannung im Reaktor sind unvorteilhaft, da während der zum Teil zeitaufwendigen Entspannung der Reaktor nicht für den nächsten Ansatz zur Verfügung steht und sind infolgedessen nur für den Labormaßstab geeignet.

WO-A 2011/028056 offenbart ein kontinuierliches Verfahren zur Herstellung hochpolymerer, aliphatischer Polycarbonate (d.h. einer Polymerkette bestehend aus einer strikten Abfolge von linearen Carbonat-Einheiten, die im Wesentlichen frei ist von Polyethersequenzen) aus einem oder mehreren Alkylenoxide und CO₂ in Gegenwart eines organischen Metallkomplexkatalysators bei Drücken im Bereich von 0 - 98 bar und Temperaturen von 20 - 120°C, welches unter anderem die kontinuierliche Abtrennung des Polymers von den noch nicht vollständig abreagierten Monomeren (incl. Auftrennung des Monomerengemisches und Rückführung in die Reaktion) und Abtrennung von einem Reaktionslösungsmittel beinhaltet. Hierbei wird das Reaktionsgemisch im Anschluss an die Reaktion zunächst einer Katalysatorabtrennung zugeführt, wobei ggf. erhebliche Mengen zusätzlichen Alkylenoxids (s. Bsp. 1 und 2) oder eines Lösungsmittels zugegeben werden. Anschließend wird das Gemisch mehreren Phasenseparatoren zugeführt, in denen der überwiegende Anteil des unreagierten Alkylenoxids, ggf. Lösungsmittel und CO₂ (>93%) verdampft und das Polymer zurückbehalten wird. Die erste Phasenseparation findet dabei in einem Separator bei Drücken im Bereich von 0 - 10 kg/(cm²g) (entspricht 0 - 9,8 bar) und Temperaturen im Bereich von 40 - 200°C statt, der ca. 30 - 80% des Alkylenoxids und CO₂ abtrennt; die nachgeschaltete zweite Stufe der Phasenseparation wird bei 0 - 5 kg/(cm²g) (entspricht 0 - 4,9 bar) und 40 - 200°C betrieben und trennt mindestens >90% der noch enthaltenen Bestandteile an unreagiertem Alkylenoxid und CO₂ ab.

Somit wird hiermit ein Verfahren beschrieben, bei dem es sich um die Entspannung von Reaktionsgemischen handelt, denen zur Abtrennung des Katalysators erhebliche Mengen an Alkylenoxid und ggf. Lösungsmittel zugesetzt werden (Bsp. 1: 650% PO bez. auf Polymer, Bsp. 2: 550% PO bez. auf Polymer). Allerdings erhält der Fachmann keinerlei Hinweise auf die konkrete Ausführung und Gestaltung der beiden zuvor genannten Separationsstufen.

Es war daher die Aufgabe der vorliegenden Erfindung, ein effizientes und kostengünstiges Verfahren zur Abtrennung von CO₂ und ggf. vorhandenen weiteren Restalkylenoxiden bereitzustellen. Insbesondere war es das Ziel, ein kontinuierliches Verfahren zur Entspannung und anschließenden Entfernung der bei der Entspannung gebildeten Gasphase, insbesondere CO₂, unter Einsatz möglichst einfacher und robuster Apparate bereitzustellen und somit den apparativen und energetischen Aufwand für die Entspannungsvorrichtung sowie das Abgassystem zu minimieren.

Überraschend wurde gefunden, dass die technische Aufgabe gelöst wird durch ein Verfahren zur Abtrennung von in flüssigen Reaktionsgemischen gelösten gasförmigen Bestandteilen bei der Copolymerisation von Alkylenoxid und Kohlendioxid, dadurch gekennzeichnet, dass
(η) das flüssige Reaktionsgemisch vor der Entspannung einen Druck von 5,0 bis 100,0 bar (absolut) aufweist, wobei die nachfolgenden Verfahrensstufen in der angegebenen Reihenfolge ausgeführt werden:
   (i) Entspannung des Reaktionsgemisches um mindestens 50 % des anliegenden Drucks,
   (ii) anschließende Tropfenabscheidung mit erster Schaumzerstörung und
   (iii) anschließende Blasenabscheidung mit zweiter Schaumzerstörung, wodurch die flüssige Phase geklärt wird,
   wobei die Verfahrensstufen (i) bis (iii) ein- oder mehrfach durchlaufen werden, bis das resultierende Reaktionsgemisch einen Druck von 0,01 bis < 5,00 bar (absolut) aufweist.

Dieses Verfahren eignet sich besonders für den Einsatz in der Herstellung von Polyethercarbonatpolyolen. Weiterer Gegenstand der Erfindung ist daher ein Verfahren zur Herstellung von Polyethercarbonatpolyolen durch Anlagerung von Alkylenoxid und Kohlendioxid an H-funktionelle Startersubstanz in Gegenwart eines Doppelmetallcyanid (DMC)-Katalysators oder eines Metallkomplexkatalysators auf Basis der Metalle Zink und/oder Cobalt, wobei
(γ) Alkylenoxid und Kohlendioxid an H-funktioneller Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird, und
(η) anschließend Abtrennung von CO₂ und ggf. gelöstem Restalkylenoxid erfolgt, wobei das flüssige Reaktionsgemisch vor der Entspannung einen Druck von 5,0 bis 100,0 bar (absolut) aufweist, enthaltend die Verfahrensstufen
   (i) Entspannung des Reaktionsgemisches um mindestens 50 % des anliegenden Drucks,
   (ii) anschließende Tropfenabscheidung mit erster Schaumzerstörung und
   (iii) anschließende Blasenabscheidung mit zweiter Schaumzerstörung, wodurch die flüssige Phase geklärt wird,
   wobei die Verfahrensstufen (i) bis (iii) ein- oder mehrfach durchlaufen werden, bis das resultierende Reaktionsgemisch einen Druck von 0,01 bis < 5,00 bar (absolut) aufweist.

Im Folgenden wird im Sinne dieser Erfindung als Schaum eine Dispersion aus Gas und Flüssigkeit bezeichnet, in welcher der volumenbezogene Anteil an Gas im Vergleich zur Flüssigkeit überwiegt. Bei einem volumenbezogenen Gasanteil von 52 - 74 % wird der Schaum als Kugelschaum, oberhalb eines volumenbezogenen Gasanteils von 74% als Polyederschaum bezeichnet. Hierbei liegt die Gasphase in Form vieler separater Blasen vor, wohingegen die Flüssigkeit in Form einer verbundenen Matrix diese Blasen umschließt.

### Schritt (η):

### Verfahrensstufe (i):

In der Verfahrensstufe (i) wird der Druck des Reaktionsgemisches nach der eigentlichen Copolymerisation - hinter dem Reaktor (d.h. das aus Schritt (γ) resultierende Reaktionsgemisch), bevorzugt hinter dem Nachreaktor (d.h. das aus Schritt (δ) resultierende Reaktionsgemisch) - um mindestens 50 %, bevorzugt mindestens 80 %, besonders bevorzugt um mindestens 90 % abgesenkt ("Entspannung"). Hierbei kommen z.B. Drosselblenden, Drosselventile oder andere für die definierte Druckabsenkung geeignete Armaturen zum Einsatz. Üblicherweise weist dieses Reaktionsgemisch vor der Entspannung einen Druck von 5,0 bis 100,0 bar (absolut), bevorzugt 10,0 bis 90,0 bar (absolut), besonders bevorzugt 20,0 bis 80,0 bar (absolut) auf. Die Temperatur des Reaktionsgemisches bei der Entspannung kann im Bereich von 60 -150 °C liegen, bevorzugt 70 -135 °C.

### Verfahrensstufe (ii):

In der Verfahrensstufe (ii) wird das bei der Druckentspannung gebildete Gemisch aus Flüssigkeit und Gasphase einem Tropfenabscheider zugeführt, mit dem Ziel, eine erste Trennung von Gas und Flüssigkeit vorzunehmen. Das Ergebnis ist ein weitestgehend tropfenfreier Gasstrom bestehend in erster Linie aus CO₂ und Alkylenoxid sowie einer Flüssigkeit/Schaumphase.

Tropfenabscheider im Sinne der vorliegenden Anmeldung sind Apparate, die aus einer Zweiphasenströmung mit kontinuierlicher Gasphase eine in Form von Tropfen vorliegende disperse Flüssigphase abscheiden. Die tropfenförmige Flüssigphase kann dabei auch selbst wieder Gaseinschlüsse in Form von Blasen enthalten oder sogar zum großen Teil aus Gasblasen bestehen, die nur durch Flüssigkeitslamellen getrennt werden, d. h. die abzuscheidende tropfenförmige Flüssigphase kann ihrerseits selbst ein Schaum gemäß obiger Definition sein. Außerdem kann die Flüssigphase zusätzlich dispergierte Feststoffpartikel enthalten (z.B. Katalysatorpartikel). Die Abscheidung erfolgt in der Regel mit einem technischen Wirkungsgrad von weniger als 100 %, d. h. in der ursprünglichen kontinuierlichen Gasphase verbleibt ein Rest der dispersen Phase. Als Tropfenabscheider kommen beispielsweise Schwerkraftabscheider, Umlenkabscheider, Lamellenabscheider, Zentrifugen, Zyklone, Drahtgestricke, Sintermaterialien, Membranen, Ultraschall, Ejektoren oder Düsen mit Prallplatten in Frage. Bevorzugt als Tropfenabscheider eingesetzt werden Zyklone oder Zentrifugen.

Besonders bevorzugt ist die Verwendung eines Zyklons als Tropfenabscheider, da aufgrund des typischerweise deutlich erhöhten Drucks im vorgelagerten Reaktionsschritt ein ausreichendes Druckgefälle für diesen Apparatetyp gegeben ist, der sich durch einen kleinen rechnerischen Grenztropfendurchmesser sowie sehr geringen Tropfenmitriss auszeichnet und vom Aufbau her einfach, kostengünstig und robust ist (ohne bewegte Teile und ohne enge Strömungsquerschnitte). Bewegte Teile im Sinne der Erfindung bedeutet, dass für den Vorgang der Abscheidung selbst keine zu bewegenden Bauteile im Apparat eingesetzt werden. Der Apparat kann somit z.B. für Wartungsarbeiten benötigte bewegte Teile enthalten. Wesentliche Merkmale des Zyklons sind ein in der Regel vertikal ausgerichteter zylindrischer Aufbau, ein tangentialer Eintritt der zu trennenden Zweiphasenströmung, ein axialer Austritt der gereinigten Gasphase (in der Regel am oberen Ende des Apparates) und ein axialer Austritt der abgeschiedenen Flüssigphase (in der Regel am unteren Ende des Apparates). Durch den tangentialen Eintritt wird im Zyklon eine Drallströmung erzeugt, mittels deren Zentrifugalbeschleunigung die Tropfen an die Wand geschleudert werden und dort als Film oder Strähne nach unten ablaufen. Zur Verbesserung der Strömungsstruktur wird ein Zyklon in der Regel im unteren Bereich Richtung Auslauf konisch ausgeführt. Abweichende Bauformen (z. B. liegender oder schräg orientierter Zylinder, axial durchströmter Apparat mit Schaufeln zur Drallerzeugung am Eintritt) sind dem Fachmann aus dem Stand der Technik bekannt und in den hier durchgeführten Betrachtungen nicht separat betrachtet. Am Austritt des Gasstroms können zusätzlich Vorrichtungen zur Abtrennung von im Gasstrom mitgerissenen Tröpfchen (Tropfenabscheider, Demistoren) installiert werden.

In einer bevorzugten Ausführungsform wird für die Tropfenabscheidung in der Verfahrensstufe (ii) kein Apparat mit bewegten Teilen eingesetzt.

Das Reaktionsgemisch in Verfahrensstufe (ii) kann die gleiche Temperatur wie in Verfahrensstufe (i) aufweisen oder sich davon unterscheiden, bevorzugt besitzt das Reaktionsgemisch in Verfahrensstufe (ii) eine Temperatur von 60 bis 150 °C, besonders bevorzugt von 70 bis 135 °C.

### Verfahrensstufe (iii)

Da in der Flüssigkeit eingeschlossene Gasblasen (Schaumphase) nachfolgende Verfahrensschritte stören können (wie z.B. Durchflussmessungen oder durch Kavitation an Pumpen), wird die Flüssigkeits-/Schaum-Phase aus Verfahrensstufe (ii) anschließend einem Blasenabscheider zugeführt mit dem Ziel, ein blasenfreies Produkt zu erhalten.

Blasenabscheider im Sinne der vorliegenden Anmeldung sind Apparate, die aus einer Zweiphasenströmung mit kontinuierlicher Flüssigphase eine in Form von Blasen vorliegende disperse Gasphase abscheiden; die Blasen können dabei auch selbst feine Tropfen der Flüssigphase enthalten. Der Gasgehalt der Zweiphasenströmung kann so hoch sein, dass die kontinuierliche Flüssigphase nur noch in Form von Lamellen zwischen den Blasen vorliegt, es sich also um einen Schaum gemäß obiger Definition handelt. Außerdem kann die Flüssigphase zusätzlich dispergierte Feststoffpartikel enthalten. Als Blasenabscheider kommen beispielweise Maßnahmen zur mechanischen Schaumzerstörung mittels rotierender Einbauten, Zentrifugen/Vakuumzentrifugen, Demistoren, spezifischer Gestricke verschiedener Materialien und Materialkombinationen, Ultraschall oder auch Ejektoren/Düsen mit Prallplatten in Frage. Die gleichzeitige oder alleinige Zugabe von Chemikalien zwecks einer chemischen Schaumzerstörung ist ebenso möglich.

Bevorzugt ist die Verwendung eines Koaleszers als Blasenabscheider. Koaleszer haben den Vorteil, dass sie im Vergleich zu einem einfachen Verweilzeitbehälter (ohne Einbauten) mit deutlich kleinerem Volumen auskommen und einfach aufgebaut sind. Außerdem sind sie nahezu verschleißfrei im Einsatz (ohne bewegte Teile) und führen dadurch auch typischerweise zu geringen Investitionskosten und sind einfach im Gebrauch, weil die Einbauten leicht zu reinigen sind oder leicht ausgetauscht werden können.

Wesentliche Merkmale des Koaleszers sind die vielseitige Auswahl an Materialien und Materialkombinationen und die Möglichkeit von Einbauten (Koaleszier-Elemente), welche bzgl. Porosität (über Fadenstärke und Packungsdichte), Packungsdicke, Durchströmlänge sowie Strömungsgeschwindigkeit innerhalb der Koaleszereinheit, jeweils abgestimmt auf die physikalischen Eigenschaften der Dispersion, variiert werden können. Bevorzugt wird in der Verfahrensstufe (iii) ein Koaleszer eingesetzt, der mindestens ein Gewebeelement als Koaleszier-Element enthält. Bevorzugt enthält der Koaleszer genau ein Gewebeelement.

Als Gewebeelemente in dem Koaleszer kommen zum Beispiel Gestricke wie beispielsweise Metallgestricke (z. B. Drahtgestricke), Kombigestricke aus Metall und Kunststoff, reine Kunststoffgestricke, adäquate Packungen aus Vliesen verschiedener Materialien und Fadenstärken oder auch Gestricke auf Glasbasis in Frage. Bevorzugt dabei sind Gestricke auf Glasbasis, Metallgestricke, Kombigestricke aus Metall- und Glas- oder Kunststoffasern, besonders bevorzugt sind Metallgestricke. Die Gewebeelemente weisen bevorzugt eine Dichte von 600 - 1200 kg/m³, besonders bevorzugt 800 - 1200 kg/m³, insbesondere bevorzugt 800 - 1050 kg/m³, auf.

Die Koaleszier-Elemente werden als homogene Packung oder gepackte Kerzen, bei größeren Apparaten auch in Segmentausführung oder Mehrkerzenelemente, dicht (so dass keine Bypassströmungen auftreten können) in den durchströmten Querschnitt des Abscheiders eingebaut. Diese können je nach Ausführung sowohl in horizontal, als auch in vertikal durchströmten Apparaten angeordnet sein. Die Länge L der Packung in Strömungsrichtung wird durch die Trennaufgabe definiert und kann bis zu einem Vielfachen des Apparatedurchmessers D betragen. Bevorzugt beträgt das Verhältnis D/L 0,5 bis 5,0, besonders bevorzugt 0,8 bis 2,5, insbesondere bevorzugt 0,8 bis 1,5 und höchst bevorzugt 0,9 bis 1,1.

Der Querschnitt der Packung oder Kerzenelemente wird ebenfalls durch die Trennaufgabe definiert und bestimmt den Durchmesser des Koaleszers.

Die erforderliche Druckdifferenz für die Durchströmung des Gewebeelements kann dabei bevorzugt über eine entsprechende hydrostatische Höhe im Zulauf (beispielsweise durch Anordnung eines vorgelagerten Zyklons oberhalb des Koaleszers) oder durch Erzeugung der erforderlichen Druckdifferenz mittels einer Pumpe realisiert werden. Durch den apparativen Aufbau und die Betriebsweise sind Schwankungen im Füllstand in der Entschäumungskammer zu minimieren.

Die Temperatur des Reaktionsgemisches in Verfahrensstufe (iii) kann gleich mit der Temperatur in Verfahrensstufe (ii) sein oder davon verschieden, bevorzugt besitzt das Reaktionsgemisch in Verfahrensstufe (iii) eine Temperatur von 60 bis 150 °C, besonders bevorzugt von 70 bis 135 °C.

Die Verfahrensstufen (i) bis (iii) werden ein- oder mehrfach durchlaufen, bis das resultierende Reaktionsgemisch einen Druck von 0,01 bis < 5,00 bar (absolut), bevorzugt 0,01 bis 2,5 bar (absolut), besonders bevorzugt 0,01 bis 1,2 bar (absolut), aufweist.

### Polyethercarbonatpolyole

Das Verfahren zur Abtrennung von in flüssigen Reaktionsgemischen gelösten gasförmigen Bestandteilen bei der Copolymerisation von Alkylenoxid und Kohlendioxid kann insbesondere bei der Herstellung von Polyethercarbonatpolyolen eingesetzt werden. Polyethercarbonatpolyole werden durch die Anlagerung von Alkylenoxid und Kohlendioxid an eine H-funktionelle Startersubstanz in Anwesenheit eines DMC-Katalysators oder eines Metallkomplexkatalysators auf Basis der Metalle Zink und/oder Cobalt erhalten, wobei
(γ) Alkylenoxid und Kohlendioxid an H-funktioneller Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird, und
(η) anschließend Abtrennung von CO₂ und ggf. gelöstem Restalkylenoxid erfolgt, wobei das flüssige Reaktionsgemisch vor der Entspannung einen Druck von 5,0 bis 100,0 bar (absolut) aufweist, enthaltend die Verfahrensstufen
   (i) Entspannung des Reaktionsgemisches um mindestens 50 % des anliegenden Drucks,
   (ii) anschließende Tropfenabscheidung mit erster Schaumzerstörung und
   (iii) anschließende Blasenabscheidung mit zweiter Schaumzerstörung, wodurch die flüssige Phase geklärt wird,
   wobei die Verfahrensstufen (i) bis (iii) ein- oder mehrfach durchlaufen werden, bis das resultierende Reaktionsgemisch einen Druck von 0,01 bis < 5,00 bar (absolut) aufweist.

In einer Ausführungsform werden vor Schritt (γ)
(α) eine Teilmenge H-funktioneller Startersubstanz und/oder ein Suspensionsmittel, das keine H-funktionelle Gruppen aufweist, in einem Reaktor gegebenenfalls gemeinsam mit DMC-Katalysator oder einem Metallkomplexkatalysators auf Basis der Metalle Zink und/oder Cobalt vorgelegt,
(β) gegebenenfalls zur Aktivierung eines DMC-Katalysators eine Teilmenge (bezogen auf die Gesamtmenge der bei der Aktivierung und Copolymerisation eingesetzten Menge an Alkylenoxid) von Alkylenoxid zu der aus Schritt (α) resultierenden Mischung zugesetzt, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

### Schritt (α):

Bei dem Verfahren kann zunächst eine Teilmenge H-funktioneller Startersubstanz und/oder ein Suspensionsmittel, das keine H-funktionelle Gruppen aufweist, im Reaktor vorgelegt werden. Anschließend wird gegebenenfalls die für die Polyaddition benötigte Menge an Katalysator in den Reaktor gegeben. Die Reihenfolge der Zugabe ist dabei nicht entscheidend. Es kann auch erst der Katalysator und anschließend eine Teilmenge H-funktioneller Startersubstanz in den Reaktor gefüllt werden. Alternativ kann auch erst der Katalysator in einer Teilmenge H-funktioneller Startersubstanz suspendiert und anschließend die Suspension in den Reaktor gefüllt werden.

In einer bevorzugten Ausführungsform der Erfindung wird in Schritt (α) eine H-funktionelle Startersubstanz im Reaktor gegebenenfalls gemeinsam mit Katalysator vorgelegt, und dabei wird kein Suspensionsmittel, das keine H-funktionelle Gruppen enthält, im Reaktor vorgelegt.

Der Katalysator wird vorzugsweise in einer Menge eingesetzt, so dass der Gehalt an Katalysator im resultierenden Reaktionsprodukt 10 bis 10000 ppm, besonders bevorzugt 20 bis 5000 ppm und höchst bevorzugt 50 bis 500 ppm beträgt

In einer bevorzugten Ausführungsform wird in das resultierende Gemisch aus (α) einer Teilmenge H-funktioneller Startersubstanz und (b) Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus (a) einer Teilmenge H-funktioneller Startersubstanz und (b) Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der Katalysator kann in fester Form oder als Suspension in Suspensionsmittel, das keine H-funktionelle Gruppen enthält, in H-funktioneller Startersubstanz oder in einer Mischung aus den genannten zugegeben werden.

In einer weiteren bevorzugten Ausführungsform wird in Schritt (α)
(α1) eine Teilmenge H-funktioneller Startersubstanz vorgelegt und
(a2) die Temperatur der Teilmenge H-funktioneller Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,
wobei der Katalysator zur Teilmenge H-funktioneller Startersubstanz in Schritt (α1) oder unmittelbar anschließend in Schritt (a2) zugesetzt wird.

Die in (α) eingesetzte Teilmenge der H-funktionellen Startersubstanz kann Komponente K enthalten, bevorzugt in einer Menge von mindestens 100 ppm, besonders bevorzugt von 100 bis 10000 ppm.

### Schritt (β):

Schritt (β) dient der Aktivierung des DMC-Katalysators. Dieser Schritt kann gegebenenfalls unter Inertgasatmosphäre, unter einer Atmosphäre aus einem Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO₂ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von CO₂, zum DMC-Katalysator bis zum Auftreten der Wärmeentwicklung. Gegebenenfalls kann die Teilmenge des Alkylenoxids in mehreren Einzelschritten, gegebenenfalls in Gegenwart von CO₂, zum DMC-Katalysator gegeben werden und dann jeweils die Zugabe des Alkylenoxids unterbrochen werden. In diesem Fall umfasst der Verfahrensschritt der Aktivierung die Zeitspanne von der Zugabe der ersten Teilmenge an Alkylenoxid, gegebenenfalls in Gegenwart von CO₂, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung des Alkylenoxids (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge des Alkylenoxids 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an H-funktioneller Startersubstanz). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei
(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

### Schritt (γ):

Die Dosierung H-funktioneller Startersubstanz, Alkylenoxids und gegebenenfalls eines Suspensionsmittels, das keine H-funktionelle Gruppen aufweist, und/oder von Kohlendioxid kann simultan oder sequentiell (portionsweise) erfolgen, beispielsweise kann die gesamte Kohlendioxidmenge, die Menge an H-funktioneller Startersubstanz, des Suspensionsmittels, das keine H-funktionelle Gruppen aufweist, und/oder die in Schritt (γ) dosierte Menge an Alkylenoxid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids, des Suspensionsmittels, das keine H-funktionelle Gruppen aufweist, und/oder H-funktioneller Startersubstanz den CO₂-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids, des Suspensionsmittels, das keine H-funktionelle Gruppen aufweist, und/oder H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung des Alkylenoxids, des Suspensionsmittels, das keine H-funktionelle Gruppen aufweist, bzw. der H-funktionellen Startersubstanz kann simultan oder sequentiell über jeweils separate Dosierungen (Zugaben) erfolgen oder über eine oder mehrere Dosierungen, wobei Alkylenoxid, das Suspensionsmittel, das keine H-funktionelle Gruppen aufweist, bzw. die H-funktionelle Startersubstanz einzeln oder als Gemisch dosiert werden können. Über die Art und/oder Reihenfolge der Dosierung der H-funktionellen Startersubstanz, des Alkylenoxids, des Suspensionsmittels, das keine H-funktionelle Gruppen aufweist, und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell das Alkylenoxid verbraucht wird und ob das Produkt gegebenenfalls CO₂-freie Polyether-Blöcke enthalten soll. Die Menge des Kohlendioxids (angegeben als Druck) kann bei der Zugabe des Alkylenoxids ebenso variieren. CO₂ kann auch als Feststoff in den Reaktor gegeben werden und dann unter den gewählten Reaktionsbedingungen in den gasförmigen, gelösten, flüssigen und/oder überkritischen Zustand übergehen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Gegebenenfalls kann in Schritt (γ) ebenfalls Katalysator zudosiert werden. Die Dosierung des Alkylenoxids, H-funktioneller Startersubstanz, des Suspensionsmittels, das keine H-funktionelle Gruppen aufweist, und des Katalysators kann über separate oder gemeinsame Dosierstellen erfolgen. In einer bevorzugten Ausführungsform werden Alkylenoxid, H-funktionelle Startersubstanz und gegebenenfalls Suspensionsmittel, das keine H-funktionelle Gruppen aufweist, über separate Dosierstellen kontinuierlich dem Reaktionsgemisch zugeführt. Diese Zugabe H-funktioneller Startersubstanz und des Suspensionsmittels, das keine H-funktionelle Gruppen aufweist, kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids das Alkylenoxid genügend schnell abreagiert. Die Konzentration an freien Alkylenoxid in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxid in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende, aktivierten DMC-Katalysator enthaltende Mischung in demselben Reaktor weiter mit Alkylenoxid, H-funktioneller Startersubstanz, gegebenenfalls Suspensionsmittel, das keine H-funktionelle Gruppen aufweist, und Kohlendioxid umgesetzt. In einer weiteren bevorzugten Ausführungsform wird die gemäß den Schritten (α) und (β) resultierende, aktivierten DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz, gegebenenfalls Suspensionsmittel, das keine H-funktionelle Gruppen aufweist, und Kohlendioxid umgesetzt.

Bei Reaktionsführung in einem Rohrreaktor werden die gemäß den Schritten (α) und (β) resultierende, aktivierten DMC-Katalysator enthaltende Mischung, H-funktionelle Startersubstanz, Alkylenoxid, gegebenenfalls Suspensionsmittel, das keine H-funktionelle Gruppen aufweist, und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner in dem Rohrreaktor eingebaut, wie sie zum Beispiel von der Firma Ehrfeld Mikrotechnik GmbH vertrieben werden, oder Mischer-Wärmetauscherelemente, die gleichzeitig die Durchmischung und Wärmeabfuhr verbessern. Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxid in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe H-funktioneller Startersubstanz und gegebenenfalls Suspensionsmittels, das keine H-funktionelle Gruppen aufweist, umfasst.

Gegenstand der Erfindung ist daher auch ein Verfahren, wobei in Schritt (γ) H-funktionelle Startersubstanz, Alkylenoxid, gegebenenfalls Suspensionsmittel, das keine H-funktionelle Gruppen aufweist, sowie DMC-Katalysator in Gegenwart von Kohlendioxid ("Copolymerisation") kontinuierlich in den Reaktor dosiert werden und wobei das resultierende Reaktionsgemisch (enthaltend Polyethercarbonatpolyol und cyclisches Carbonat) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyethercarbonatpolyole eine DMC-Katalysator-enthaltende Mischung hergestellt, dann werden gemäß Schritt (γ)
(γ1) jeweils eine Teilmenge H-funktioneller Startersubstanz, Alkylenoxid und Kohlendioxid zudosiert zum Initiieren der Copolymerisation, und
(γ2) während des Fortschreitens der Copolymerisation jeweils die verbleibende Menge an DMC-Katalysator, H-funktioneller Startersubstanz, gegebenenfalls Suspensionsmittel, das keine H-funktionelle Gruppen aufweist, und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der Katalysator bevorzugt suspendiert in H-funktioneller Startersubstanz zugegeben, wobei die Menge vorzugsweise so gewählt ist, dass der Gehalt an Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder des Reaktanden aufrechterhalten wird. Die Katalysatorzufuhr kann echt kontinuierlich oder in relativ eng beabstandeten Inkrementen erfolgen. Gleichermaßen können eine kontinuierliche Zugabe H-funktioneller Startersubstanz und eine kontinuierliche Zugabe des Suspensionsmittels, das keine H-funktionellen Gruppen aufweist, echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass H-funktionelle Startersubstanz während des Hauptteils des Copolymerisations-Verfahrens vorhanden ist. Eine inkrementelle Zugabe von Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

### Schritt (δ)

Gegebenenfalls kann in einem Schritt (δ) das Reaktionsgemisch aus Schritt (γ) in einen Nachreaktor überführt werden, in dem im Wege einer Nachreaktion der Gehalt an freiem Alkylenoxid im Reaktionsgemisch reduziert wird, bevorzugt auf < 500 ppm. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Die Temperatur in dem nachgeschalteten Reaktor liegt bevorzugt bei 50 bis 150°C und besonders bevorzugt bei 80 bis 140°C. Die Verweilzeit des Reaktionsgemisches in dem Nachreaktor beträgt bevorzugt 1,0 bis 20,0 Stunden. In einer bevorzugten Ausführungsform werden nach Ablauf der Verweilzeit zum resultierenden Gemisch 5 bis 100 ppm der Komponente K zugegeben wird.

Die erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

### Alkylenoxid

Allgemein können für das Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxid Ethylenoxid und/oder Propylenoxid, insbesondere Propylenoxid eingesetzt. In dem erfindungsgemäßen Verfahren kann als Alkylenoxid auch eine Mischung von Alkylenoxiden eingesetzt werden.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht Mₙ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 2 oder 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mₙ im Bereich von 150 bis 8000 g/mol bei einer Funktionalität von 2 bis 3 und Polyetherpolyole mit einem Molekulargewicht Mₙ im Bereich von 150 bis 8000 g/mol und einer Funktionalität von 2 bis 3.

In einer besonders bevorzugten Ausführungsform ist in Schritt (α) die Teilmenge H-funktioneller Startersubstanz ausgewählt aus mindestens einer Verbindung der Gruppe bestehend aus Polyethercarbonatpolyolen mit einem Molekulargewicht Mₙ im Bereich von 150 bis 8000 g/mol bei einer Funktionalität von 2 bis 3 und Polyetherpolyolen mit einem Molekulargewicht Mₙ im Bereich von 150 bis 8000 g/mol und einer Funktionalität von 2 bis 3. In einer weiteren besonders bevorzugten Ausführungsform ist die H-funktionelle Startersubstanz in Schritt (γ) ausgewählt aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol.

Die Herstellung der Polyethercarbonatpolyole erfolgt durch katalytische Anlagerung von Kohlendioxid und Alkylenoxid an H-funktionelle Startersubstanz. Unter "H-funktionell" wird im Sinne der Erfindung die Anzahl an für die Alkoxylierung aktiven H-Atomen pro Molekül der Startersubstanz verstanden.

Die H-funktionelle Startersubstanz, die während der Reaktion kontinuierlich in den Reaktor zudosiert wird, kann Komponente K enthalten.

### Komponente K

Als Komponente K geeignete Verbindungen sind dadurch gekennzeichnet, dass sie mindestens eine Phosphor-Sauerstoff-Bindung enthalten. Als Komponente K geeignet sind beispielsweise Phosphorsäure sowie Phosphorsäuresalze, Phosporsäurehalogenide, Phosphorsäureamide, Phosphorsäureester und Salze der Mono- und Diester der Phosphorsäure.

Unter den unter Komponente K zuvor und nachfolgend genannten Estern werden im Sinne der Erfindung jeweils die Alkylester, Arylester und/oder Alkarylester-Derivate verstanden.

Als Phosphorsäureester sind beispielsweise geeignet Mono-, Di- oder Triester von Phosphorsäure, Mono-, Di-, Tri- oder Tetraester von Pyrophosphorsäure und Mono-, Di-, Tri-, Tetra- oder Polyester von Polyphosphorsäure und Alkoholen mit 1 bis 30 C-Atomen. Als Komponente K sind beispielsweise die folgenden Verbindungen geeignet: Phosphorsäuretriethylester, Phosphorsäurediethylester, Phosphorsäuremonoethylester, Phosphorsäuretripropylester, Phosphorsäuredipropylester, Phosphorsäuremonopropylester, Phosphorsäuretributylester, Phosphorsäuredibutylester, Phosphorsäuremonobutylester, Phosphorsäuretrioctylester, Phosphorsäuretris(2-ethylhexyl)ester, Phosphorsäuretris-(2-butoxyethyl)ester, Phosphorsäurediphenylester, Phosphorsäuredikresylester, Fructose-1,6-bisphosphat, Glucose-1-phosphat, Phosphorsäure-bis-(dimethylamid)-chlorid, Phosphorsäure-bis-(4-nitrophenyl)-ester, Phosphorsäure-cyclopropylmethyl-diethyl-ester, Phosphorsäure-dibenzylester, Phosphorsäurediethyl-3-butenylester, Phosphorsäure-dihexadecylester, Phosphorsäure-diisopropylester-chlorid, Phosphorsäure-diphenylester, Phosphorsäure-diphenylester-chlorid, Phosphorsäure-2-hydroxyethylmethacrylatester, Phosphorsäure-mono-(4-chlorphenylester)-dichlorid, Phosphorsäure-mono-(4-nitrophenylester)-dichlorid, Phosphorsäure-monophenylester-dichlorid, Phosphorsäure-tridecylester, Phosphorsäure-trikresylester, Phosphorsäure-trimethylester, Phosphorsäure-triphenylester, Phosphorsäuretripyrolidid, Phosphorsulfochlorid, Phosphorsäuredichlorid-dimethylamid, Phosphorsäuredichloridmethylester, Phosphorylbromid, Phosphorylchlorid, Phosphorylchinolinchlorid Calciumsalz und O-Phosphorylethanolamin, Alkali- und Ammoniumdihydrogenphosphate, Alkali-, Erdalkali- und Ammoniumhydrogenphosphate, Alkali-, Erdalkali- und Ammoniumphosphate.

Unter Ester der Phosphorsäure (Phosphorsäureester) werden auch die durch Propoxylierung der Phosphorsäure erhältlichen Produkte verstanden (bspw. erhältlich als Exolit® OP 560).

Als Komponente K geeignet sind auch Phosphonsäure und Phosphorige Säure sowie Mono- und Diester der Phosphonsäure sowie Mono-, Di- und Triester der Phosphorigen Säure sowie jeweils deren Salze, Halogenide und Amide.

Als Phosphonsäureester sind beispielsweise geeignet Mono- oder Diester von Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren und Cyanphosphonsäuren oder Mono-, Di-, Tri- oder Tetraester von Alkyldiphosphonsäuren und Alkoholen mit 1 bis 30 C-Atomen. Als Phosphorigsäureester sind beispielsweise geeignet Mono-, Di- oder Triester der Phosphorigen Säure und Alkoholen mit 1 bis 30 C-Atomen. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure, Octadecylphosphonsäure sowie deren Mono- und Dimethylester, -ethylester, -butylester, -ethylhexylester oder -phenylester, Butylphosphonsäuredibutylester, Phenylphosphonsäuredioctylester, Phosphonoameisensäuretriethylester, Phosphonoessigsäuretrimethylester, Phosphonoessigsäuretriethylester, 2-Phosphonopropionsäuretrimethylester, 2-Phosphonopropionsäuretriethylester, 2-Phosphonopropionsäuretripropylester, 2-Phosphonopropionsäuretributylester, 3-Phosphonopropionsäuretriethylester, 2-Phosphonobuttersäure-triethylester, 4-Phosphonocrotonsäuretriethylester, (12-Phosphonododecyl)-phosphonsäure, Phosphonoessigsäure, Phosphonoessigsäure-P,P-bis-(2,2,2-trifluorethyl)-methylester, Phosphonoessigsäure-P,P-diethyl-trimethylsilylester, Phosphonoessigsäure-P,P-dimethyl-tert.-butylester, Phosphonoessigsäure-P,P-dimethylester Kaliumsalz, Phosphonoessigsäure-P,P-dimethylethylester, 16-Phosphonohexadecansäure, 6-Phosphonohexansäure, N-(Phosphonomethyl)-glycin, N-(Phosphonomethyl)-glycin-monoisopropylaminsalz, N-(Phosphonomethyl)-iminodiessigsäure, (8-Phosphono-octyl)-phosphonsäure, 3-Phosphonopropionsäure, 11-Phosphonoundecansäure, Phosphonsäure-pinakolester, Trilaurylphosphit, Tris-(3-ethyloxethanyl-3 -methyl)phosphit, Heptakis(dipropylenglykol)phosphit, Phosphorigsäure-bis-(diisopropylamid)-2-cyanethylester, Phosphorigsäure-bis-(diisopropylamid)-methylester, Phosphorigsäuredibutylester, Phosphorigsäure-(diethylamid)-dibenzylester, Phosphorigsäure-(diethylamid)-ditertiärbutylester, Phosphorigsäure-diethylester, Phosphorigsäure-(diisopropylamind)-diallylester, Phosphorigsäure-(diisopropylamid)-dibenzylester, Phosphorigsäure-(diisopropylamid)-di-tert.-butylester, Phosphorigsäure-(diisopropylamid)-dimethylester, Phosphorigsäure-(dimethylamid)-dibenzylester, Phosphorigsäuredimethylester, Phosphorigsäuredimethyl-trimethylsilylester, Phosphorigsäure-diphenylester, Phosphorigsäuremethylesterdichlorid, Phosphorigsäure-mono-(2-cyanethylester)-diisopropylamid-chlorid, Phosphorigsäure-(o-phenylenester)-chlorid, Phosphorigsäure-tributylester, Phosphorigsäuretriethylester, Phosphorigsäure-triisopropylester, Phosphorigsäure-triphenylester, Phosphorigsäure-tris-(tert.-butyl-dimethylsilyl)-ester, Phosphorigsäure-(tris-1,1,1,3,3,3-hexafluor-2-propyl)-ester, Phosphorigsäure-tris-(trimethylsilyl)-ester, Phosphorigsäure-dibenzylester. Unter Ester der Phosphorigen Säure werden auch die durch Propoxylierung der Phosphorigen Säure erhältlichen Produkte verstanden (bspw. erhältlich als Exolit® OP 550).

Als Komponente K geeignet sind auch Phosphinsäure, Phosphonigsäure und Phosphinigsäure sowie jeweils deren Ester. Als Phosphinsäureester sind beispielsweise geeignet Ester von Phosphinsäure, Alkylphosphinsäuren, Dialkylphosphinsäuren oder Arylphosphinsäuren und Alkoholen mit 1 bis 30 C-Atomen. Als Phosphonigsäureester sind beispielsweise geeignet Mono- und Diester von Phosphonigsäure oder Arylphosphonigsäure und Alkoholen mit 1 bis 30 C-Atomen. Das beinhaltet beispielsweise Diphenylphosphinsäure oder 9,10-Dihydro-9-Oxa-10-Phosphaphenanthren-10-Oxid.

Die als Komponente K geeigneten Ester der Phosphorsäure, Phosphonsäure, Phosphorigen Säure, Phosphinsäure, Phosphonigsäure oder Phosphinigsäure werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Cyanphosphonsäure, Alkyldiphosphonsäuren, Phosphonigsäure, Phosphorige Säure, Phosphinsäure, Phosphinigsäure oder deren Halogenderivaten oder Phosphoroxiden mit Hydroxyverbindungen mit 1 bis 30 C-Atomen wie Methanol, Ethanol, Propanol, Butanol, Pentanol, Hexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Als Komponente K geeignete Phosphinoxide enthalten eine oder mehrere Alkyl-, Aryl oder Aralkylgruppen mit 1 - 30 C-Atomen, die an den Phosphor gebunden sind. Bevorzugte Phosphinoxide haben die allgemeine Formel R₃P=O wobei R eine Alkyl-, Aryl oder Aralkylgruppe mit 1 - 20 C-Atomen ist. Geeignete Phosphinoxide sind beispielsweise Trimethylphosphinoxid, Tri(n-butyl)phosphinoxid, Tri(n-octyl)phosphinoxid, Triphenylphosphinoxid, Methyldibenzylphosphinoxid und deren Mischungen.

Des Weiteren sind als Komponente K geeignet Verbindungen des Phosphors, die durch Reaktion mit OH-funktionellen Verbindungen (wie bspw. Wasser oder Alkoholen) eine oder mehrere P-O-Bindung(en) ausbilden können. Beispielsweise kommen als solche Verbindungen des Phosphors in Frage Phosphor-(V)-sulfid, Phosphortribromid, Phosphortrichlorid und Phosphortriiodid. Es können auch beliebige Mischungen der vorgenannten Verbindungen als Komponente K eingesetzt werden. Besonders bevorzugt als Komponente K ist Phosphorsäure.

### Suspensionsmittel

Das gegebenenfalls eingesetzte Suspensionsmittel enthält keine H-funktionellen Gruppen. Als Suspensionsmittel, das keine H-funktionelle Gruppen aufweist, sind alle polar-aprotischen, schwach polar-aprotischen und unpolar-aprotischen Lösungsmittel geeignet, die jeweils keine H-funktionelle Gruppen enthalten. Als Suspensionsmittel, das keine H-funktionelle Gruppen aufweist, können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel, das keine H-funktionelle Gruppen aufweist, werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on. Bevorzugt werden in Schritt (γ) 2 Gew.-% bis 20 Gew.-%, besonders bevorzugt 5 Gew.-% bis 15 Gew.-% und insbesondere bevorzugt 7 Gew.-% bis 11 Gew.-% des Suspensionsmittels, das keine H-funktionelle Gruppen aufweist, zudosiert, bezogen auf die Summe der in Schritt (γ) zudosierten Komponenten.

### DMC-Katalysatoren

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zink-hexacyanocobaltat(III)) und einem organischen Komplexliganden (z.B. tert.-Butanol) noch einen Polyether mit einem zahlenmittlerem Molekulargewicht größer als 500 g/mol enthalten. Die DMC-Katalysatoren werden vorzugsweise erhalten, indem man
(A) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(B) wobei im zweiten Schritt der Feststoff aus der aus (A) erhaltenen Suspension durch bekannte Techniken (wie Zentrifugation oder Filtration) abgetrennt wird,
(C) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(D) wobei anschließend der erhaltene Feststoff, gegebenenfalls nach Pulverisierung, bei Temperaturen von im allgemeinen 20 - 120 °C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (Schritt (B)) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze. Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

M(X)ₙ (II)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (III),

Mᵣ(X)₃ (III)

wobei
M ausgewählt ist aus den Metallkationen Fe³⁺, Al³⁺, Co³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (IV),

M(X)ₛ (IV)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Iso-thiocyanat oder Nitrat ist,
oder geeignete Metallsalze besitzen die allgemeine Formel (V),

M(X)ₜ (V)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,
Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

(Y)ₐM'(CN)_{b}(A)_{c} (VI)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

Mₓ[M'ₓ,(CN)_{y}]_{z} (VII)

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1,y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 (Spalte 8, Zeilen 29 - 66) zu entnehmen. Besonders bevorzugt verwendet wird Zinkhexacyanocobaltat(III). Die bei der Herstellung der DMC-Katalysatoren zugesetzten organischen Komplexliganden sind beispielsweise in US-A 5 158 922 (siehe insbesondere Spalte 6, Zeilen 9 bis 65), US-A 3 404 109, US-A 3 829 505, US-A 3 941 849, EP-A 700 949, EP-A 761 708, JP 4 145 123, US-A 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Kom-plexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly-(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt (Schritt (B)) erfolgt die Isolierung des Feststoffs (d.h. die Vorstufe des Katalysators) aus der Suspension durch bekannte Techniken, wie Zentrifugation oder Filtration.

In einer bevorzugten Ausführungsvariante wird der isolierte Feststoff anschließend in einem dritten Schritt (Schritt (C)) mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (C-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (C-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.-%, bezogen auf die Gesamtmenge der Waschlösung des Schrittes (C-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100 °C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat (Zn₃[Co(CN)₆]₂) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

In einer ersten Ausführungsform betrifft die Erfindung ein Verfahren zur Abtrennung von in flüssigen Reaktionsgemischen gelösten gasförmigen Bestandteilen bei der Copolymerisation von Alkylenoxid und Kohlendioxid, dadurch gekennzeichnet, dass
(η) das flüssige Reaktionsgemisch vor der Entspannung einen Druck von 5,0 bis 100,0 bar (absolut) aufweist, wobei die nachfolgenden Verfahrensstufen in der angegebenen Reihenfolge ausgeführt werden:
   (i) Entspannung des Reaktionsgemisches um mindestens 50 % des anliegenden Drucks,
   (ii) anschließende Tropfenabscheidung mit erster Schaumzerstörung und
   (iii) anschließende Blasenabscheidung mit zweiter Schaumzerstörung, wodurch die flüssige Phase geklärt wird,
   wobei die Verfahrensstufen (i) bis (iii) ein- oder mehrfach durchlaufen werden, bis das resultierende Reaktionsgemisch einen Druck von 0,01 bis < 5,00 bar (absolut) aufweist.

In einer zweiten Ausführungsform betrifft die Erfindung ein Verfahren gemäß der ersten Ausführungsform, dadurch gekennzeichnet, dass das aus (η) resultierende Reaktionsgemisch einen Druck von 0,01 - 2,50 bar (absolut) aufweist.

In einer dritten Ausführungsform betrifft die Erfindung ein Verfahren gemäß der Ausführungsform 1 oder 2, dadurch gekennzeichnet, dass das Reaktionsgemisch vor der Entspannung in Verfahrensstufe (i) eine Temperatur im Bereich von 60 - 150°C aufweist.

In einer vierten Ausführungsform betrifft die Erfindung ein Verfahren gemäß einer der Ausführungsformen 1 bis 3, dadurch gekennzeichnet, dass in Verfahrensstufe (ii) die Tropfenabscheidung mittels Zentrifugalkräften durchgeführt wird.

In einer fünften Ausführungsform betrifft die Erfindung ein Verfahren gemäß einer der Ausführungsformen 1 bis 4, dadurch gekennzeichnet, dass in Verfahrensstufe (ii) ein Zyklon eingesetzt wird.

In einer sechsten Ausführungsform betrifft die Erfindung ein Verfahren gemäß der fünften Ausführungsform, dadurch gekennzeichnet, dass das Reaktionsgemisch den Zyklon in Verfahrensstufe (ii) nur durch Gravitation verlässt.

In einer siebten Ausführungsform betrifft die Erfindung ein Verfahren gemäß einer der Ausführungsformen 1 bis 6, dadurch gekennzeichnet, dass in Verfahrensstufe (iii) ein Koaleszer verwendet wird.

In einer achten Ausführungsform betrifft die Erfindung ein Verfahren gemäß der siebten Ausführungsform, dadurch gekennzeichnet, dass der Koaleszer mindestens ein Gewebeelement enthält.

In einer neunten Ausführungsform betrifft die Erfindung ein Verfahren gemäß der achten Ausführungsform, dadurch gekennzeichnet, dass das Gewebeelement ein Metallgestrick ist.

In einer zehnten Ausführungsform betrifft die Erfindung ein Verfahren gemäß der achten oder neunten Ausführungsform, dadurch gekennzeichnet, dass das Gewebeelement eine Dichte von 600 - 1200 kg/m³ aufweist, bevorzugt 800 - 1200 kg/m³, besonders bevorzugt 800 - 1050 kg/m³.

In einer elften Ausführungsform betrifft die Erfindung ein Verfahren zur Herstellung von Polyethercarbonatpolyolen durch Anlagerung von Alkylenoxid und Kohlendioxid an H-funktionelle Startersubstanz in Gegenwart eines Doppelmetallcyanid (DMC)-Katalysators oder eines Metallkomplexkatalysators auf Basis der Metalle Zink und/oder Cobalt, wobei
(γ) Alkylenoxid und Kohlendioxid an H-funktionelle Startersubstanz in einem Reaktor in Gegenwart eines Doppelmetallcyanid-Katalysators oder eines Metallkomplexkatalysators auf Basis der Metalle Zink und/oder Cobalt angelagert werden, wobei ein Reaktionsgemisch enthaltend das Polyethercarbonatpolyol erhalten wird,
(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird, und
(η) anschließend Abtrennung von CO₂ und ggf. gelöstem Restalkylenoxid, enthaltend die Verfahrensstufen (i) - (iii) gemäß einer der Ausführungsformen 1 bis 10, erfolgt.

In einer zwölften Ausführungsform betrifft die Erfindung ein Verfahren gemäß der elften Ausführungsform, dadurch gekennzeichnet, dass vor Schritt (γ)
(α) eine Teilmenge H-funktioneller Startersubstanz und/oder ein Suspensionsmittel, das keine H-funktionelle Gruppen aufweist, in einem Reaktor gegebenenfalls gemeinsam mit DMC-Katalysator oder einem Metallkomplexkatalysators auf Basis der Metalle Zink und/oder Cobalt vorgelegt,
(β) gegebenenfalls zur Aktivierung eines DMC-Katalysators eine Teilmenge (bezogen auf die Gesamtmenge der bei der Aktivierung und Copolymerisation eingesetzten Menge an Alkylenoxid) von Alkylenoxid zu der aus Schritt (α) resultierenden Mischung zugesetzt, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

In einer dreizehnten Ausführungsform betrifft die Erfindung ein Verfahren gemäß der elften oder zwölften Ausführungsform, dadurch gekennzeichnet, dass in Schritt (δ) in einem Nachreaktor die freie Alkylenoxidkonzentration auf < 500 ppm am Austritt des Nachreaktors reduziert wird.

In einer vierzehnten Ausführungsform betrifft die Erfindung ein Verfahren gemäß einer der Ausführungsformen 11 bis 13, dadurch gekennzeichnet, dass in Schritt (δ) das Reaktionsgemisch vor dem Schritt (η) bei einer Temperatur von 50 bis 150°C für eine Verweilzeit von 1,0 bis 20,0 Stunden belassen wird, und nach Ablauf dieser Verweilzeit zum resultierenden Gemisch 5 bis 100 ppm Komponente K zugegeben wird.

### Beispiele

### Beispiel 1:

(γ) Anlagerung von Propylenoxid und Kohlendioxid an ein Gemisch aus Glycerin und Propylenglykol in Gegenwart eines DMC-Katalysators in einem Rührkessel bei 107°C und einem zu Beginn eingestellten Reaktionsdruck von 74 bar, wobei Propylenoxid, Kohlendioxid und das Gemisch aus Glycerin und Propylenglykol kontinuierlich in den Reaktor dosiert werden.

Das erhaltene Rohprodukt ist ein Polyethercarbonatpolyol mit einem Molgewicht von 2700 g/mol, einer Funktionalität von 2,8 und einem Gehalt von 20 Gew.-% an eingebautem CO₂. Das Rohprodukt enthält weiterhin 4 Gew.-% gelöstes CO₂ und 7 Gew.-% cyclisches Propylencarbonat (cPC).

Als DMC-Katalysator wurde bei der Herstellung des eingesetzten Rohprodukts DMC-Katalysator hergestellt gemäß Beispiel 6 in WO 01/80994 A1 eingesetzt.
(η) Verfahrensstufe (i): Entspannung des Reaktionsgemisches aus Schritt (γ) von 74 bar auf 1 bar (absolut).
   Verfahrensstufe (ii): Das bei der Druckentspannung des Reaktionsgemisches gebildete Gemisch aus Flüssigkeit und Gasphase wird einem Tropfenabscheider zugeführt. Der eingesetzte Tropfenabscheider ist ein Zyklon mit einem Volumen von 0,06 Litern und einem tangentialen Eintritt der Zweiphasenströmung. Das Unterteil zur Abführung der schaumhaltigen Flüssigphase ist konisch aufgebaut. Der Zyklon besitzt einen Austritt im oberen Bereich zur Abführung der abgetrennten Gasphase. Zur Temperatureinstellung ist der Zyklon mit einer Mantelheizung ausgestattet. Der Zyklon ist 2 Meter oberhalb eines Koaleszers angeordnet, sodass der Ablauf aus dem Zyklon ohne Pumpe durch den nachfolgenden Koaleszer strömt. Die Temperatur des Gemisches bei Eintritt in den Zyklon beträgt 80 °C.
   Verfahrensstufe (iii): Anschließend wird das Gemisch zur Blasenabscheidung in einen Koaleszer überführt. Der Koaleszer ist ein horizontales, zylindrisch ausgeführtes Gefäß mit einem Durchmesser D = 56 mm und einem Volumen von 0,6 Litern. Im vorderen Bereich des Koaleszers ist ein Gewebeelement (Wickelmodul aus Draht, D = 50 mm, L = 50 mm, D/L = 1, Fa. Rhodius) mit einer Dichte von 1000 kg/m³eingebaut. Zur visuellen Überprüfung der Phasentrennung und Schaumzerstörung ist der Koaleszer im hinteren Bereich mit einem Schauglas ausgestattet, wobei die Strömungszone hinter dem Gewebeelement beobachtet werden kann. Der Koaleszer ist zur Beheizung mit Halbrohrschlangen ausgestattet. Der Eintritt des Gemisches erfolgt axial und durchströmt das Gewebeelement. Der Abzug von abgetrennter Gasphase (nach oben) und der Flüssigphase (nach unten) erfolgt im Bereich hinter dem Gewebeelement. Die Temperatur des Gemisches bei Eintritt in den Koaleszer beträgt 80°C und wird im Koaleszer auf 100°C erhitzt.

Das Verfahren wird kontinuierlich betrieben, wobei der Massenstrom des Rohprodukts vor der Druckentspannung 9 kg/h beträgt. Über 48 Stunden kontinuierlichen Betriebs sind in der Entschäumungskammer nach der Verfahrensstufe (iii), mit Blick auf die Strömungszone hinter dem Gewebeelement, keine Schaumphase und nur vereinzelte Gasblasen sichtbar.

### Beispiel 2:

(γ) Die Herstellung des Rohprodukts erfolgt wie in Beispiel 1.
(η) Verfahrensstufe (i): Entspannung des Reaktionsgemisches aus Schritt (γ) von 74 bar auf 1 bar (absolut).
   Verfahrensstufe (ii): Das bei der Druckentspannung des Reaktionsgemisches gebildete Gemisch aus Flüssigkeit und Gasphase wird einem Tropfenabscheider zugeführt. Der eingesetzte Tropfenabscheider ist ein Zyklon mit einem Volumen von 0,06 Litern und einem tangentialen Eintritt der Zweiphasenströmung. Das Unterteil zur Abführung der schaumhaltigen Flüssigphase ist konisch aufgebaut. Der Zyklon besitzt einen Austritt im oberen Bereich zur Abführung der abgetrennten Gasphase. Zur Temperatureinstellung ist der Zyklon mit einer Mantelheizung ausgestattet. Der Zyklon ist 2 Meter oberhalb eines Koaleszers angeordnet, sodass der Ablauf aus dem Zyklon ohne Pumpe durch den Koaleszer strömt. Die Temperatur des Gemisches bei Eintritt in den Zyklon beträgt 80 °C.
   Verfahrensstufe (iii): Anschließend wird das Gemisch zur Blasenabscheidung in einen Koaleszer überführt. Der Koaleszer ist ein horizontales, zylindrisch ausgeführtes Gefäß mit einem Durchmesser D = 56 mm und einem Volumen von 0,6 Litern. Im vorderen Bereich des Koaleszers ist ein Gewebeelement (Wickelmodul aus Draht, D = 30 mm, L = 30 mm, D/L = 1, Fa. Rhodius) mit einer Dichte von 1000 kg/m³eingebaut. Zur visuellen Überprüfung der Phasentrennung und Schaumzerstörung ist der Koaleszer im hinteren Bereich mit einem Schauglas ausgestattet, wobei die Strömungszone hinter dem Gewebeelement beobachtet werden kann. Der Koaleszer ist zur Beheizung mit Halbrohrschlangen ausgestattet. Der Eintritt des Gemisches erfolgt axial und durchströmt das Gewebeelement. Der Abzug von abgetrennter Gasphase (nach oben) und der Flüssigphase (nach unten) erfolgt im Bereich hinter dem Gewebeelement. Die Temperatur des Gemisches bei Eintritt in den Koaleszer beträgt 80°C und wird im Koaleszer durch eine Mantelheizung auf 100°C erhitzt.

Das Verfahren wird kontinuierlich betrieben, wobei der Massenstrom des Rohprodukts vor der Druckentspannung 9 kg/h beträgt. Über 48 Stunden kontinuierlichen Betriebs sind in der Entschäumungskammer nach der Verfahrensstufe (iii), mit Blick auf die Strömungszone hinter dem Gewebeelement, keine Schaumphase und nur vereinzelte Gasblasen sichtbar.

### Beispiel 3:

(γ) Die Herstellung des Rohprodukts erfolgt wie in Beispiel 1.
(η) Verfahrensstufe (i): Entspannung des Reaktionsgemisches aus Schritt (γ) von 74 bar auf 1 bar (absolut).
   Verfahrensstufe (ii): Das bei der Druckentspannung des Reaktionsgemisches gebildete Gemisch aus Flüssigkeit und Gasphase wird einem Tropfenabscheider zugeführt. Der eingesetzte Tropfenabscheider ist ein Zyklon mit einem Volumen von 0,06 Litern und einem tangentialen Eintritt der Zweiphasenströmung. Das Unterteil zur Abführung der schaumhaltigen Flüssigphase ist konisch aufgebaut. Der Zyklon besitzt einen Austritt im oberen Bereich zur Abführung der abgetrennten Gasphase. Zur Temperatureinstellung ist der Zyklon mit einer Mantelheizung ausgestattet. Der Zyklon ist 2 Meter oberhalb eines Koaleszers angeordnet, sodass der Ablauf aus dem Zyklon ohne Pumpe durch den Koaleszer strömt. Die Temperatur des Gemisches bei Eintritt in den Zyklon beträgt 80 °C. Verfahrensstufe (iii): Anschließend wird das Gemisch zur Blasenabscheidung in einen Koaleszer überführt. Der Koaleszer ist ein horizontales, zylindrisch ausgeführtes Gefäß mit einem Durchmesser D = 56 mm und einem Volumen von 0,6 Litern. Im vorderen Bereich des Koaleszers ist ein Gewebeelement (Wickelmodul aus Draht, D = 30 mm, L = 30 mm, D/L = 1, Fa. Rhodius) mit einer Dichte von 850 kg/m³eingebaut. Zur visuellen Überprüfung der Phasentrennung und Schaumzerstörung ist der Koaleszer im hinteren Bereich mit einem Schauglas ausgestattet, wobei die Strömungszone hinter dem Gewebeelement beobachtet werden kann. Der Koaleszer ist zur Beheizung mit Halbrohrschlangen ausgestattet. Der Eintritt des Gemisches erfolgt axial und durchströmt das Gewebeelement. Der Abzug von abgetrennter Gasphase (nach oben) und der Flüssigphase (nach unten) erfolgt im Bereich hinter dem Gewebeelement. Die Temperatur des Gemisches bei Eintritt in den Koaleszer beträgt 80°C und wird im Koaleszer durch eine Mantelheizung auf 100°C erhitzt.

Das Verfahren wird kontinuierlich betrieben, wobei der Massenstrom des Rohprodukts vor der Druckentspannung 9 kg/h beträgt. Über 48 Stunden kontinuierlichen Betriebs sind in der Entschäumungskammer nach der Verfahrensstufe (iii), mit Blick auf die Strömungszone hinter dem Gewebeelement, keine Schaumphase und nur vereinzelte Gasblasen sichtbar.

### Beispiel 4:

(γ) Die Herstellung des Rohprodukts erfolgt wie in Beispiel 1.
(η) Verfahrensstufe (i): Entspannung des Reaktionsgemisches aus Schritt (γ) von 74 bar auf 1 bar (absolut).
   Verfahrensstufe (ii): Das bei der Druckentspannung des Reaktionsgemisches gebildete Gemisch aus Flüssigkeit und Gasphase wird einem Tropfenabscheider zugeführt. Der eingesetzte Tropfenabscheider ist ein Zyklon mit einem Volumen von 0,06 Litern und einem tangentialen Eintritt der Zweiphasenströmung. Das Unterteil zur Abführung der schaumhaltigen Flüssigphase ist konisch aufgebaut. Der Zyklon besitzt einen Austritt im oberen Bereich zur Abführung der abgetrennten Gasphase. Zur Temperatureinstellung ist der Zyklon mit einer Mantelheizung ausgestattet. Der Zyklon ist 2 Meter oberhalb eines Koaleszers angeordnet, sodass der Ablauf aus dem Zyklon ohne Pumpe durch den Koaleszer strömt. Die Temperatur des Gemisches bei Eintritt in den Zyklon beträgt 80 °C. Verfahrensstufe (iii): Anschließend wird das Gemisch zur Blasenabscheidung in einen Koaleszer überführt. Der Koaleszer ist ein horizontales, zylindrisch ausgeführtes Gefäß mit einem Durchmesser D = 56 mm und einem Volumen von 0,6 Litern. Im vorderen Bereich des Koaleszers ist ein Gewebeelement (einfädiger Pressling mit einem Drahtdurchmesser von 0,14 mm, D = 30 mm, L = 30 mm, D/L = 1, Fa. Rhodius) mit einer Dichte von 1000 kg/m³ überführt. Zur visuellen Überprüfung der Phasentrennung und Schaumzerstörung ist der Koaleszer im hinteren Bereich mit einem Schauglas ausgestattet, wobei die Strömungszone hinter dem Gewebeelement beobachtet werden kann. Der Koaleszer ist zur Beheizung mit Halbrohrschlangen ausgestattet. Der Eintritt des Gemisches erfolgt axial und durchströmt das Gewebeelement. Der Abzug von abgetrennter Gasphase (nach oben) und der Flüssigphase (nach unten) erfolgt im Bereich hinter dem Gewebeelement. Die Temperatur des Gemisches bei Eintritt in den Koaleszer beträgt 80°C und wird im Koaleszer durch eine Mantelheizung auf 100°C erhitzt.

Das Verfahren wird kontinuierlich betrieben, wobei der Massenstrom des Rohprodukts vor der Druckentspannung 9 kg/h beträgt. Über 48 Stunden kontinuierlichen Betriebs sind in der Entschäumungskammer nach der Verfahrensstufe (iii), mit Blick auf die Strömungszone hinter dem Gewebeelement, keine Schaumphase und nur vereinzelte Gasblasen sichtbar.

## Patentansprüche

1. Verfahren zur Abtrennung von in flüssigen Reaktionsgemischen gelösten gasförmigen Bestandteilen bei der Copolymerisation von Alkylenoxid und Kohlendioxid, **dadurch gekennzeichnet, dass**
(η) das flüssige Reaktionsgemisch vor der Entspannung einen Druck von 5,0 bis 100,0 bar (absolut) aufweist, wobei die nachfolgenden Verfahrensstufen in der angegebenen Reihenfolge ausgeführt werden:
(i) Entspannung des Reaktionsgemisches um mindestens 50 % des anliegenden Drucks,
(ii) anschließende Tropfenabscheidung mit erster Schaumzerstörung und
(iii) anschließende Blasenabscheidung mit zweiter Schaumzerstörung, wodurch die flüssige Phase geklärt wird,
wobei die Verfahrensstufen (i) bis (iii) ein- oder mehrfach durchlaufen werden, bis das resultierende Reaktionsgemisch einen Druck von 0,01 bis < 5,00 bar (absolut) aufweist.

2. Verfahren gemäß Anspruch 1, **dadurch gekennzeichnet, dass** das aus (η) resultierende Reaktionsgemisch einen Druck von 0,01 - 2,50 bar (absolut) aufweist.

3. Verfahren gemäß Anspruch 1 oder 2, **dadurch gekennzeichnet, dass** das Reaktionsgemisch vor der Entspannung in Verfahrensstufe (i) eine Temperatur im Bereich von 60 - 150°C aufweist.

4. Verfahren gemäß einem der Ansprüche 1 bis 3, **dadurch gekennzeichnet, dass** in Verfahrensstufe (ii) die Tropfenabscheidung mittels Zentrifugalkräften durchgeführt wird.

5. Verfahren gemäß einem der Ansprüche 1 bis 4, **dadurch gekennzeichnet, dass** in Verfahrensstufe (ii) ein Zyklon eingesetzt wird.

6. Verfahren gemäß Anspruch 5, **dadurch gekennzeichnet, dass** das Reaktionsgemisch den Zyklon in Verfahrensstufe (ii) nur durch Gravitation verlässt.

7. Verfahren gemäß einem der Ansprüche 1 bis 6, **dadurch gekennzeichnet, dass** in Verfahrensstufe (iii) ein Koaleszer verwendet wird.

8. Verfahren gemäß Anspruch 7, **dadurch gekennzeichnet, dass** der Koaleszer mindestens ein Gewebeelement enthält.

9. Verfahren gemäß Anspruch 8, **dadurch gekennzeichnet, dass** das Gewebeelement ein Metallgestrick ist.

10. Verfahren gemäß Anspruch 8 oder 9, **dadurch gekennzeichnet, dass** das Gewebeelement eine Dichte von 600 - 1200 kg/m³ aufweist, bevorzugt 800 - 1200 kg/m³, besonders bevorzugt 800 - 1050 kg/m³.

11. Verfahren zur Herstellung von Polyethercarbonatpolyolen durch Anlagerung von Alkylenoxid und Kohlendioxid an H-funktionelle Startersubstanz in Gegenwart eines Doppelmetallcyanid (DMC)-Katalysators oder eines Metallkomplexkatalysators auf Basis der Metalle Zink und/oder Cobalt, wobei
(γ) Alkylenoxid und Kohlendioxid an H-funktionelle Startersubstanz in einem Reaktor in Gegenwart eines Doppelmetallcyanid-Katalysators oder eines Metallkomplexkatalysators auf Basis der Metalle Zink und/oder Cobalt angelagert werden, wobei ein Reaktionsgemisch enthaltend das Polyethercarbonatpolyol erhalten wird,
(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird, und
(η) anschließend Abtrennung von CO₂ und ggf. gelöstem Restalkylenoxid, enthaltend die Verfahrensstufen (i) - (iii) gemäß einem der Ansprüche 1 bis 10, erfolgt.

12. Verfahren gemäß Anspruch 11, **dadurch gekennzeichnet, dass** vor Schritt (γ)
(α) eine Teilmenge H-funktioneller Startersubstanz und/oder ein Suspensionsmittel, das keine H-funktionelle Gruppen aufweist, in einem Reaktor gegebenenfalls gemeinsam mit DMC-Katalysator oder einem Metallkomplexkatalysators auf Basis der Metalle Zink und/oder Cobalt vorgelegt wird,
(β) gegebenenfalls zur Aktivierung eines DMC-Katalysators eine Teilmenge (bezogen auf die Gesamtmenge der bei der Aktivierung und Copolymerisation eingesetzten Menge an Alkylenoxid) von Alkylenoxid zu der aus Schritt (α) resultierenden Mischung zugesetzt wird, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

13. Verfahren gemäß Anspruch 11 oder 12, **dadurch gekennzeichnet, dass** in Schritt (δ) in einem Nachreaktor die freie Alkylenoxidkonzentration auf < 500 ppm am Austritt des Nachreaktors reduziert wird.

14. Verfahren gemäß einem der Ansprüche 11 bis 13, **dadurch gekennzeichnet, dass** in Schritt (δ) das Reaktionsgemisch vor dem Schritt (η) bei einer Temperatur von 50 bis 150°C für eine Verweilzeit von 1,0 bis 20,0 Stunden belassen wird, und nach Ablauf dieser Verweilzeit zum resultierenden Gemisch 5 bis 100 ppm Komponente K zugegeben werden.
